# EUROPÄISCHE PATENTSCHRIFT

(11) **EP 2 424 412 B1**
(45) Veröffentlichungstag und Bekanntmachung des Hinweises auf die Patenterteilung: **13.09.2017**
(21) Anmeldenummer: 10714281.2
(22) Anmeldetag: 20.04.2010
(51) Int. Cl.: A47J 31/46

(54) **KAFFEEAUTOMAT UND SCHLAUCHVENTIL**
AUTOMATIC COFFEE MAKER AND TUBE VALVE
MACHINE À CAFÉ ET VALVE À TUYAU FLEXIBLE

(30) Priorität: 27.04.2009 DE 102009002657
(43) Veröffentlichungstag der Anmeldung: 07.03.2012
(73) Patentinhaber: Koninklijke Douwe Egberts B.V., 3532 AD Utrecht (NL)
(72) Erfinder: DABURGER, Josef, 83313 Siegsdorf-Hammer (DE); DOMMANN, Ulrike, 83278 Traunstein (DE); STEFFL, Michael, 83250 Marquartstein (DE)
(74) Vertreter: Gritschneder, Martin
(86) Internationale Anmeldenummer: PCT/EP2010/055141
(87) Internationale Veröffentlichungsnummer: WO 2010/124962

(56) Entgegenhaltungen:
- EP-A1- 0 151 500
- WO-A1-2008/071024
- WO-A1-2008/138820
- DE-A1- 19 540 885
- DE-U1- 8 815 998

## Beschreibung

Die Erfindung betrifft einen Kaffeeautomaten mit einem Schlauchventil, das einen Durchlassschlauch für Flüssigkeiten und/oder Gase und eine Regulierungseinrichtung zur Regulierung eines Mengendurchlasses durch den Durchlassschlauch aufweist. Außerdem betrifft sie ein Schlauchventil für einen Kaffeeautomaten. Sie lässt sich allgemein bei Heißgetränkeautomaten anwenden, die neben Kaffee beispielsweise auch Tee, Teezubereitungsmischungen oder Trinkbrühen fertigen. Der Einfachheit halber, aber ohne Beschränkung darauf, ist im Folgenden von Kaffeeautomaten die Rede.

Die Regulierung des Durchlasses von Flüssigkeiten und/oder Gasen bei Kaffeeautomaten kann einerseits der Absperrung und andererseits der gezielten Richtungsführung von Flüssigkeiten bzw. Gasen in bestimmte Funktionseinheiten bzw. Auslaufrichtungen dienen. So kann durch entsprechende Ventilstellung beispielsweise eine Beschickung einer Brühwasserleitung mit Heißwasser oder einer Dampfleitung mit Wasserdampf gewählt werden. Zur Durchlassregulierung kommen in höherwertigen Kaffeeautomaten Keramikventile zum Einsatz, in denen eine mit einer Durchlassöffnung versehene Verstellscheibe entsprechend der gewählten Zubereitungsfunktion so gedreht wird, dass die Durchlassöffnung zusammen mit Zu- und Ableitungen einen Durchlasskanal bildet.

Zur mengendosierten Abgabe von Wasserdampf sind Schlauchventile bekannt. Sie bestehen aus einem Durchlassschlauch, durch den Flüssigkeit bzw. Gas geleitet wird, und einer Quetschbacke, die den Durchlassschlauch so quetscht, dass sein Innen-Querschnitt reduziert wird. Dadurch werden die Durchlassmenge und indirekt auch der Durchlassdruck reguliert.

DE 88 15 998 U1 offenbart ein Gerät zum Aufheizen oder Aufschäumen von Getränken mit einem Gerätegehäuse, in dem eine elektrisch beheizte Dampferzeugungskammer angeordnet ist. Darüber hinaus ist im Gehäuse eine Wasserzufuhreinrichtung angeordnet, mittels der der Benutzer in einer Füllphase eine Wasserportion in die Dampferzeugungskammer eingibt, wobei die Dampferzeugungskammer diese Wasserportion anschließend verdampft und über eine Dampfleitung mit einem außen am Gerätegehäuse nach unten ragenden Dampfrohr einer Dampfabgabeöffnung zuführt. DE 88 15 998 U1 offenbart ein Schlauchquetschventil, das einen Dampfschlauch für Flüssigkeiten und/oder Gase und eine Zunge zur Regulierung eines Mengendurchlasses durch den Dampfschlauch aufweist.

Aufgabe der Erfindung ist es, ein Durchlassventil anzugeben, das eine Richtungsführung von Flüssigkeiten bzw. Gasen ermöglicht und das möglichst unanfällig gegen Verschmutzung ist.

Diese Aufgabe wird gelöst durch einen Kaffeeautomaten gemäß Anspruch 1 sowie einem Schlauchventil gemäß Anspruch 8.

Die Erfindung macht es sich im Wesentlichen zunutze, dass der Durchlassschlauch oder wenigstens ein wesentlicher Abschnitt des Schlauchs eines Schlauchventils eine gewisse Flexibilität aufweist. Die Flexibilität ist notwendig, da anderenfalls eine ausreichende Regulierung eines Mengendurchlasses durch den Durchlassschlauch nicht zu gewährleisten ist. Die Erfindung nutzt die Flexibilität des Schlauches nunmehr doppelt aus, nämlich neben der Drosselung der Durchlassmenge durch den Durchlassschlauch auch noch zusätzlich dazu, eine Richtungsänderung der durchlaufenden Flüssigkeiten bzw. Gase auf einfache Art zu bewerkstelligen. Denn der flexible Durchlassschlauch kann durch einfaches Hin- und Herbewegen die Fluide in unterschiedliche Richtungen lenken. Er kann damit zusätzlich als eine Art Mehrwegeschalter dienen, mit dem Fluide in verschiedene Kanäle gelenkt werden können.

Die Erfindung beruht also auf einer Funktionenkombination durch Hinzufügen einer Richtungsänderungsvorrichtung zu einem herkömmlichen Schlauchventil der eingangs genannten Art. Dadurch kann zusätzlich zur Mengenregulierung die Richtungsänderung bzw. die Richtungsführung von Durchlaufflüssigkeiten bzw. -gasen überraschend einfach und ohne nennenswerten materialmäßigen oder konstruktiven Zusatzaufwand realisiert werden. Das erfinderische Ventil gewinnt dadurch auf geringem Bauraum eine wesentliche zusätzliche Funktion hinzu, die bisher durch einen separaten Schalter erfüllt werden musste.

Eine Richtungsänderungsvorrichtung kann beispielsweise ein mit dem Durchlassschlauch fest oder lose verbundenes und in mindestens zwei Richtungen verschiebbares Schiebeelement sein, das den Durchlassschlauch in unterschiedliche Richtungen ausrichtet bzw. seine Mündung verschiebt. Die Richtungen können verschiedenen Zubereitungs-, Wartungs-, Reinigungs- oder anderen Funktionen des Kaffeeautomaten zugeordnet sein.

Zusätzlich fungiert mindestens eine Quetschbacke als Regulierungseinrichtung, die auf den Schlauch wirkt. Dies bedeutet, dass die Regulierung des Mengendurchlasses von außerhalb des Durchlassschlauchs erfolgt und damit auch extern gesteuert werden kann. Dazu wird eine Kraft über die Quetschbacke auf den Durchlassschlauch ausgeübt, die den Durchmesser des Schlauchs beeinflusst. Die Quetschbacke kann den Schlauch quetschen, so dass sie seinen Durchtrittsquerschnitt zumindest verringert.

Es besteht eine mechanische Kopplung der Quetschbacke mit der Richtungsänderungsvorrichtung. Durch eine Kopplung kann eine Richtungsänderung des Durchlassschlauchs in Abhängigkeit von der Stellung der Quetschbacke erfolgen. Eine Kopplung kann auch in der Gegenrichtung vorliegen, bei der eine Umstellung der Richtungsänderungsvorrichtung eine entsprechende Positionsveränderung der Quetschbacke bewirkt. Besonders bevorzugt besteht die Kopplung in beide Wirkrichtungen, sodass eine Positionsverstellung der Quetschbacke eine Richtungsänderung des Durchlassschlauchs und umgekehrt bewirken kann. Dabei kann die Kopplung vorzugsweise einer bestimmten Position der Quetschbacke oder der Richtungsänderungsvorrichtung grundsätzlich mehrere korrespondierende Positionen des jeweiligen anderen Elements zuordnen. Die korrespondierenden Positionen der Elemente sind dann nicht nur untereinander abhängig, sondern auch von einer gewählten Funktion des Kaffeeautomaten im Betrieb. Es kann also beispielsweise bei unterschiedlichen Stellungen der Richtungsänderungsvorrichtung die Quetschbackenposition jeweils gleich bleiben und nur bei einer bestimmten angewählten Funktion des Kaffeeautomaten verändert werden. Die Kopplung der Quetschbacke und der Richtungsänderungsvorrichtung bedeutet also, dass die jeweilige Quetschposition der Quetschbacke mit einer Ausrichtung des Durchlassschlauchs korrespondiert, die der jeweiligen Zubereitungs-, Wartungs- oder Reinigungsfunktion des Kaffeeautomaten entspricht. Die Kopplung dient damit der selbsttätigen Verstellung der Positionen der Quetschbacke und der Richtungsänderungsvorrichtung innerhalb des Schlauchventils in Abhängigkeit von der jeweiligen Funktion des Kaffeeautomaten.

In einer weiteren Ausgestaltung der Erfindung ist das Schlauchventil als Auslass für eine Heißgetränkespende und/oder für eine Drainage und/oder für Gase ausgebildet. Als Heißgetränkespendeauslass leitet es ein Heißgetränk aus einer Brühkammer in Richtung des Auslasses des Kaffeeautomaten für Heißgetränke im Außenbereich des Automatengehäuses. Ein Drainage-Auslass leitet Flüssigkeit bzw. Gas nach außen ab, wobei die Drainage dazu dient, Restwasser bzw. Restdampf oder ähnliche Substanzen, beispielsweise aus einem Brüh- oder einem Schäumprozess zu entsorgen. Die Drainage verhindert, dass Restflüssigkeiten bzw. -gase bei Aktivierung einer anderen Funktion des Kaffeeautomaten noch innerhalb des Geräts vorhanden sind und dadurch Störwirkungen entfalten. Als Gas-Auslass dient das Ventil dann, wenn es beispielsweise mit Wasserdampf beschickt wird, der in eine Dampfdüse, beispielsweise zum Aufschäumen von Milch, geleitet wird.

Insbesondere bei der Ausbildung des Schlauchventils als Auslass für Heißgetränke entfaltet das Schlauchventil seine Vorteile. Im Gegensatz zu einem Keramikventil, bei dem die Ventiltechnik mit dem Heißgetränk selbst in Kontakt kommt, durchläuft das Heißgetränk beim erfindungsgemäßen Schlauchventil nur den Durchlassschlauch, während insbesondere die mechanischen Elemente des Schlauchventils, zum Beispiel eine Quetschbacke, nicht mit dem Getränk in Kontakt kommen. Dadurch ist eine Verschmutzung der mechanischen Funktionsteile des Schlauchventils praktisch nicht möglich.

Auch als Drainageauslass, insbesondere als Dampf-Ableitungssystem empfiehlt sich das erfindungsgemäße Schlauchventil, weil abzuleitender Dampf bzw. Rest-Brühwasser meist noch sehr hohe Temperatur aufweist. Der Durchlassschlauch kann daher aus einem temperaturbeständigen Material hergestellt sein. Zudem wird üblicherweise mit hohem Anfangsdruck drainiert, sodass die mechanische Belastung eines Durchleitungsventils bei einem Drainageauslass sehr groß ist. Diese Belastung kann das Schlauchventil beispielsweise dadurch indirekt aufnehmen, dass der Durchlassschlauch innerhalb eines Gehäuses gehalten wird, das ihn in Bereichen stabilisiert, die mit hohen Drücken beaufschlagt sind. Bei Druckbelastung stützt sich dann der Durchlassschlauch gegen das Gehäuse ab, das ihn vollständig umgibt. Dagegen kann er in Bereichen, in denen Flüssigkeit bzw. Gas näherungsweise in Atmosphärendruck durchströmt, ohne eine solche Stabilisierung, beispielsweise frei hängend ausgebildet sein.

Die Stellung der Quetschbacke kann im Betrieb in Abhängigkeit von jeweils unterschiedlichen aktivierten Zubereitungsfunktionen des Kaffeeautomaten geregelt sein. Ein Benutzer kann also durch die Wahl einer Zubereitungsfunktion indirekt auf die Stellung der Quetschvorrichtung im Betrieb Einfluss nehmen. Beispielsweise kann die Stellung der Quetschbacke bei Wahl der Zubereitungsfunktion "Kaffeebrühen" so eingestellt sein, dass der Durchlaufschlauch nicht verschlossen ist. Zur Druckerhöhung, beispielsweise bei der Zubereitung von Kaffee mit Crema, kann mit Hilfe der Quetschbacke eine gewisse Drosselung des Durchflusses durch den Durchlassschlauch erzielt werden. Hierzu verschließt die Quetschbacke den Durchlassschlauch nur teilweise, wodurch der notwendige Druck - vorzugsweise ein Druck von mindestens 6 bar - erzeugt wird.

Am Ende eines Kaffee-Zubereitungsprozesses kann die Quetschbacke hingegen den Durchlassschlauch komplett verschließen, damit nach dem Brühvorgang kein Restbrühwasser aus dem Auslauf tropft, sondern innerhalb des Schlauchventils zurückgehalten wird. Bei nachfolgender Wahl einer Drainage-Funktion kann die Stellung der Quetschbacke einen ungehinderten Ausfluss des restlichen Brühwassers ermöglichen.

Mit Hilfe der Stellung der Quetschbacke kann also nicht nur zwischen einem freien Mengendurchfluss und einem vollständigen Abriegeln des Durchflusses variiert, sondern auch eine Drosselung erzielt werden, durch die die Durchflussmenge ebenso regelbar ist wie der Druck, den das Gas bzw. die Flüssigkeit stromauf des Schlauchventils hat. Eine

Druckregelung kann beispielsweise zur Weiterverarbeitung von zubereiteten Heißgetränken notwendig sein, wie beispielsweise Kaffee, der zur Cremaerzeugung mit hohem Druck beaufschlagt werden soll.

Nach einer weiteren vorteilhaften Ausgestaltung der Erfindung sind die Quetschkräfte der Quetschbacke federbasiert reguliert. Die Quetschbacke kann von einer Feder in ihrer Quetschposition auf den Schlauch gedrückt werden. Die Feder ist bevorzugt in ihrer Federkraft variabel und weist vorzugsweise eine flache Kennlinie auf. Sie dient insbesondere dem Ausgleich von Toleranzen des Durchlassschlauchs, beispielsweise seiner Härte und seines Querschnitts. Wird die Quetschbacke mit Hilfe und Unterstützung der Feder zur Abriegelung eines Mengendurchlasses durch den Durchlassschlauch verwendet, so kann die Feder bei einem zu hohen Druck stromauf des Ventils soweit nachgeben, dass ein Überdruck sich entspannt. Die Feder kann also nicht nur als Toleranzausgleich, sondern auch als eine Art Überdruckventil fungieren. Nach einer vorteilhaften Weiterbildung der Erfindung ist ein Führungsrad mit einer Führungskulisse für die Betätigung der Richtungsänderungsvorrichtung vorgesehen. Die Führungskulisse steuert die Richtungsänderungsvorrichtung. Das Führungsrad kann einen Zahnkranz umfassen, womit es einfach steuerbar ist. Es kann zugleich der Kopplung der Richtungsänderungsvorrichtung mit einer Quetschbacke dienen. Die Führungskulisse kann beispielsweise in Form einer kurvenartigen Führungsvertiefung innerhalb des Führungsrads verlaufen. In die Vertiefung kann ein Zahn an der Richtungsänderungsvorrichtung hineinragen. Sie dient dazu, bei Drehung des Führungsrads auch die Position der Richtungsänderungsvorrichtung zu verändern.

Zusätzlich ist bevorzugt eine Quetschbackenführung vorgesehen, die der Regelung der Stellung der Quetschbacke dient. Auch die Quetschbackenführung kann in einem Führungsrad angeordnet sein. Sie kann auf demselben Führungsrad wie die Führungskulisse der Richtungsänderungsvorrichtung beispielsweise als eine zweite Kulisse auf der anderen Seite des Führungsrads ausgebildet sein, auf der die Führungskulisse für die Richtungsänderungsvorrichtung angebracht ist. In diesem Falle dient das Führungsrad als Träger für die Führungskulissen der Richtungsänderungsvorrichtung einerseits und der Quetschbackenvorrichtung andererseits. Mit Hilfe des Führungsrads und seinen daran bzw. darin angebrachten Führungselementen werden die Quetschbacke und die Richtungsänderungsvorrichtung gekoppelt, sodass jeder Stellung der Richtungsänderungsvorrichtung genau eine und immer dieselbe Stellung der Quetschbacke zugeordnet ist.

Vorteilhafterweise werden mehrere Quetschbacken verwendet, insbesondere zwei einander gegenüberliegende Quetschbacken, die den Durchlassschlauch an einem Punkt in seinem Längsverlauf gemeinsam quetschen können. Zusätzlich oder alternativ können mehrere entlang des Längsverlaufs des Schlauchs zueinander versetzte Quetschbacken vorgesehen sein. Die Quetschbacken bzw. Quetschbackenpaare können beispielsweise eine mehrfache Sicherung der Verschlussfunktionen der Quetschbacken oder eine differenziertere Regelung des Verschlussmechanismus bewirken.

Ein besonderer Vorteil ergibt sich, wenn die Quetschbacke als Teil eines Klemmhebels ausgebildet ist. Der Klemmhebel weist eine Lagerung auf, um die er schwenkbar ist. Dadurch sind die Lage und die Quetschwirkung der Quetschbacke einfach justierbar, insbesondere in Kombination mit der bereits erwähnten federbasierten Regulierung der Quetschbacke.

Besonders bevorzugt weist ein erfindungsgemäßes Schlauchventil ein Gehäuse auf, in dem der Durchlassschlauch fest verbunden mit einer Anstechvorrichtung und/oder einer Brühgutaufnahme gehalten wird. Eine feste Verbindung kann beispielsweise dadurch erzielt werden, dass die Anstechvorrichtung bzw. die Brühgutaufnahme an den Durchlassschlauch im Spritzgussverfahren, beispielsweise im Zweikomponenten-Spritzguss, angespritzt wird.

Mit der Anstechvorrichtung können Behältnisse mit vorproduzierten Getränkekonzentraten angestochen werden, sodass ihr Inhalt in den Durchlassschlauch gelangen kann. Die Brühgutaufnahme dient der Aufnahme von Kaffeepads oder von Kaffeemehl, durch die Heißwasser gepumpt wird, um Kaffee zu produzieren, der wiederum in den Durchlassschlauch des Schlauchventils geleitet wird. Das Schlauchventil ist vorzugsweise zusammen mit der Anstechvorrichtung bzw. der Brühgutaufnahme aus dem Gehäuse entnehmbar. Das Gehäuse schirmt das Schlauchventil nach außen hin ab und dient damit auch dem Schutz vor Verunreinigungen oder vor mechanischen Störeinwirkungen. Die Kombination des Schlauchventils zusammen mit einer Anstechvorrichtung bzw. einer Brühgutaufnahme als austauschbares Teil dient dazu, das einzige verschmutzungs- und damit wartungsanfällige Element, nämlich den Durchlassschlauch, einzeln entnehmen zu können, um ihn separat reinigen und warten zu können.

Neben der bevorzugten Ausführungsform des Schlauchventils mit mindestens einer Quetschbacke kann alternativ oder ergänzend vorgesehen sein, dass der Durchlassschlauch eine elastische Verengung als Regulierungseinrichtung aufweist. Das Material des Schlauchs kann so beschaffen bzw. ausgewählt sein, dass der Schlauch aufgrund seiner vorbestimmten Elastizität einem Innendruck bis zu einem festgelegten oder maximalen Betrag widersteht. Die Quetschkraft der Quetschbacke der vorher beschriebenen Ausführungsform kann hier also durch die festgelegte Elastizität des Materials des Schlauchs ersetzt werden. Die Verwendung von Quetschbacken kann ggf. vollkommen entfallen. Der Durchlassschlauch reguliert dann den Durchfluss auch selbsttätig ohne aktive zusätzliche Krafteinwirkung von außen, da die Elastizität der Verengung dazu führt, dass der Innen-Durchmesser des Schlauchs ohne weiteres Zutun in Abhängigkeit vom Druck stromauf der Verengung variiert und somit eine Drosselungs- bzw. Öffnungswirkung erzielt wird.

Das Prinzip der Erfindung wird im Folgen anhand von Zeichnungen beispielshalber noch näher erläutert. Es zeigen:
Figur 1 eine Teilschnittansicht eines erfindungsgemäßen Schlauchventils unter Weglassung des Durchlassschlauchs,
Figur 2 eine weitere Ansicht des Schlauchventils,
Figur 3 eine entgegengesetzte Ansicht auf dasselbe Schlauchventil,
Figur 4 eine Draufsicht auf das Schlauchventil,
Figur 5a eine erste Schnittansicht des Schlauchventils entlang einer Schnittlinie A'-A aus Figur 4,
Figur 5b eine zweite Schnittansicht entlang einer Schnittlinie B-B' aus Figur 4,
Figur 6a eine erste Schnittansicht des Schlauchventils entlang der Schnittlinie A'-A aus Figur 4 in einer zweiten Funktionsstellung,
Figur 6b eine zweite Schnittansicht entlang der Schnittlinie B-B' in der zweiten Funktionsstellung,
Figur 7a eine Schnittansicht entlang der Schnittlinie A'-A in einer dritten Funktionsstellung,
Figur 7b eine zweite Schnittansicht entlang der Schnittlinie B-B' in der dritten Funktionsstellung,
Figur 8 einen Längsschnitt eines Durchlassschlauchs einer alternativen Ausführungsform eines erfindungsgemäßen Schlauchventils.

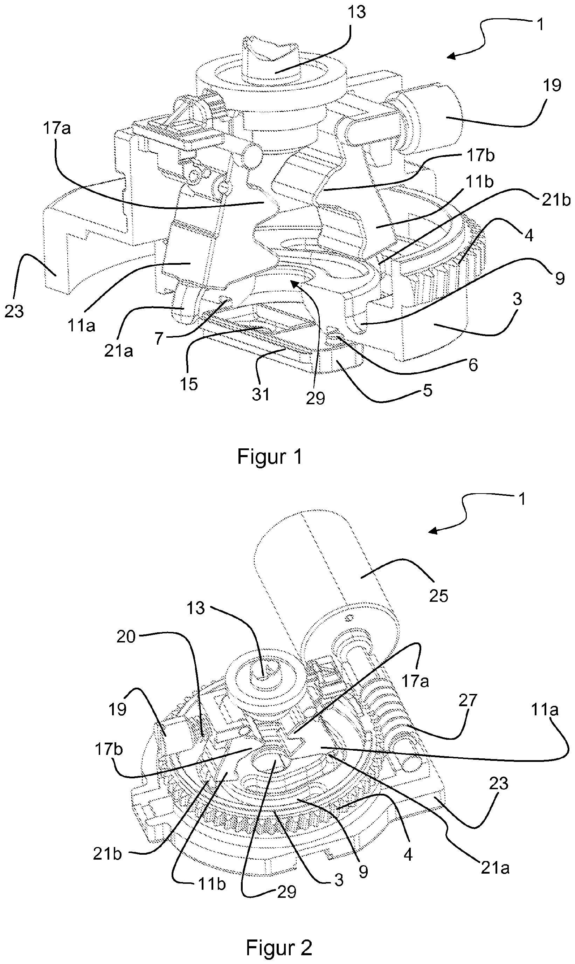

Figur 1 zeigt das Innere eines Ausführungsbeispiels eines erfindungsgemäßen Schlauchventils 1. In einem Gehäuse 23 sind zwei Klemmhebel 11a, 11b schwenkbar angeordnet, die jeweils eine in Richtung des Gehäuseinneren weisende Quetschbacke 17a, 17b aufweisen. Beide Klemmhebel 11a, 11b sind im oberen Bereich der Figur 1 schwenkbar gelagert, wobei der eine Klemmhebel 11b horizontal gegen eine Feder (nicht erkennbar) bewegbar ist. Zur Variierung der Federkraft der Feder ist eine Stellschraube 19 vorgesehen. Auf der den Lagerungen entgegengesetzten Enden der Klemmhebel 11a, 11b befinden sich Führungsnasen 21a, 21b.

Ein Zahnrad 3 mit einer Zahnreihe 4 ist um eine vertikale Achse drehbar unterhalb der Klemmhebel 11a, 11b so angeordnet, dass die Führungsnasen 21a, 21b in eine an der Oberseite des Zahnrads 3 ausgebildeten Quetschbackenführung in Form zweier eingelassener kulissenartiger Führungsrillen 9 greifen. Die Führungsrillen 9 führen beide jeweils vom Inneren des Rades 3 nach außen, so dass die Klemmhebel 11a, 11b bei einer Drehung des Zahnrads 3 im Wesentlichen horizontal und linear nach innen bzw. außen geführt werden.

An der Unterseite des Zahnrads 3 ist eine Richtungsänderungsvorrichtung angebracht, die einen horizontal, senkrecht zur Bewegungsrichtung der Klemmhebel 11a, 11b bewegbaren Schlitten 5 umfasst. Der Schlitten 5 weist seitlich eine Schienenführung 31 auf, entlang der er im Gehäuse linear bewegbar geführt werden kann. Zur Steuerung ihrer Hin- und Herbewegung ist auf der Unterseite des Zahnrads 3 eine Führungskulisse 7 vorgesehen, die mit einem auf der Oberseite des Schlittens 5 angebrachten Zapfen 6 zusammenwirkt. Je nach Stellung des Zahnrads 3 steht der Schlitten 5 auch in unterschiedlichen Positionen. Ein Durchlassschlauch (nicht gezeigt) würde von der Oberseite des Schlauchventils 1, an der eine Anstechvorrichtung 13 für Getränkepatronen positioniert ist, entlang der beiden Quetschbacken 17a, 17b senkrecht nach unten geführt. Deshalb hat das Zahnrad 3 in der Mitte eine Öffnung 29, durch die der Durchlassschlauch geführt werden kann, ebenso wie der Schlitten 5, der eine Führungsöffnung 15 aufweist. In Abhängigkeit von der Drehstellung des Zahnrads 3 werden die Klemmhebel 11a, 11b unterschiedlich positioniert und damit die Quetschbacken 17a, 17b entweder geöffnet oder geschlossen, so dass der Durchlassschlauch ganz, teilweise oder gar nicht geöffnet ist. Durch die gefederte Lagerung des Klemmhebels 11b kann der Anpressdruck seiner Quetschbacke 17b variiert werden, wodurch Toleranzen in der Dicke und der Elastizität des Durchlassschlauchs ausgeglichen werden können. Bei zu hohen Drücken im Durchlassschlauch dient die gefederte Lagerung auch dazu, einen Überdruckabbau zu ermöglichen. Der Durchlassschlauch wird gleichzeitig - ebenfalls in Abhängigkeit von der Drehstellung des Zahnrads 3 - mit Hilfe des Schlittens 5 in unterschiedliche Richtungen geleitet.

Figur 2 zeigt dasselbe Schlauchventil 1 in Teilen in einer perspektivischen Ansicht von oben. Neben den bereits beschriebenen Elementen ist die Feder 20 zu sehen, die gegen den Klemmhebel 11b wirkt. Ein Stellmotor 25 variiert über ein Schneckenrad 27 die Stellung des Zahnrads 3. Dadurch kann das Zahnrad 3 in Abhängigkeit von verschiedenen anwählbaren Funktionen des Kaffeeautomaten verstellt werden.

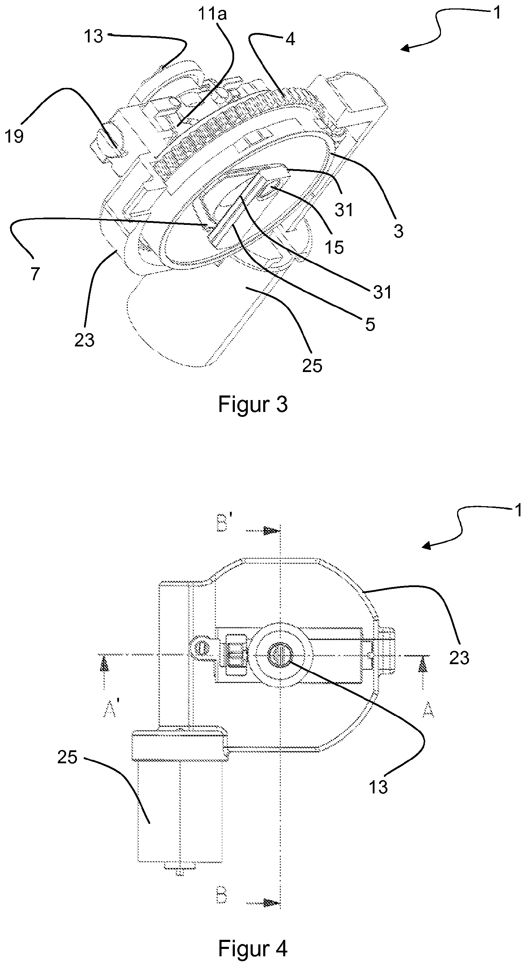

Figur 3 zeigt dasselbe Schlauchventil 1 von der Unterseite her. Dabei ist insbesondere die Form der Führungskulisse 7 für den Schlitten 5 erkennbar. Diese ist so ausgeführt, dass der Zapfen 6 des Schlittens 5 sowohl ganz nah am Mittelpunkt des Zahnrads 3 als auch an seiner Außengrenze stehen kann. Der Schlitten 5 kann so mithilfe der Führungskulisse zwischen den Extrempositionen einer Mittelstellung und einer Außenstellung hin- und herbewegt werden. Er führt in seiner Führungsöffnung 15 den Durchlassschlauch mit, sodass dieser in Abhängigkeit von der Stellung des Zahnrads in unterschiedliche Richtungen zeigen und beispielsweise an verschiedene Kanäle anschließen kann.

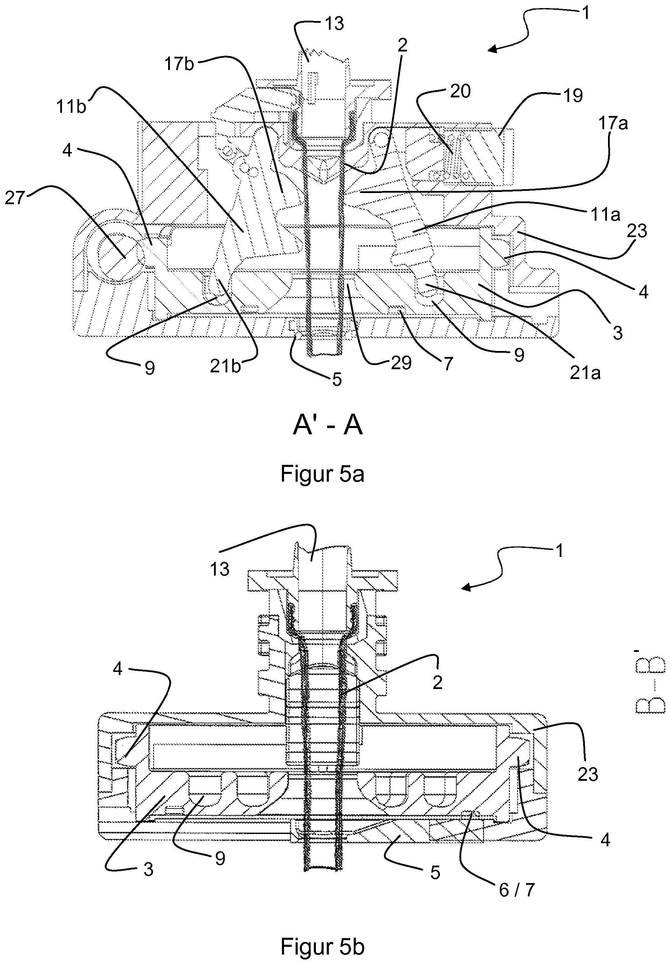

Figur 4 dient der Illustration der Perspektiven der Folge-Figuren 5a bis 7b. Sie zeigt eine Draufsicht auf dasselbe Schlauchventil und zwei Schnittebenen A'-A und B-B', die im Folgenden zur Illustration unterschiedlicher Stellungen des Durchlassschlauchs verwendet werden.

Figur 5a und 5b zeigen das erfindungsgemäße Schlauchventil 1 mit einem Durchlassschlauch 2 in einer ersten Funktionsstellung, nämlich der Drainagefunktion bei geöffnetem Durchlassschlauch 2. Der Durchlassschlauch 2 ist nicht durch die Quetschbacken 17a, 17b gequetscht. Der Schlitten 5 ist so gestellt, dass der Durchlassschlauch 2 genau vertikal abwärts verläuft.

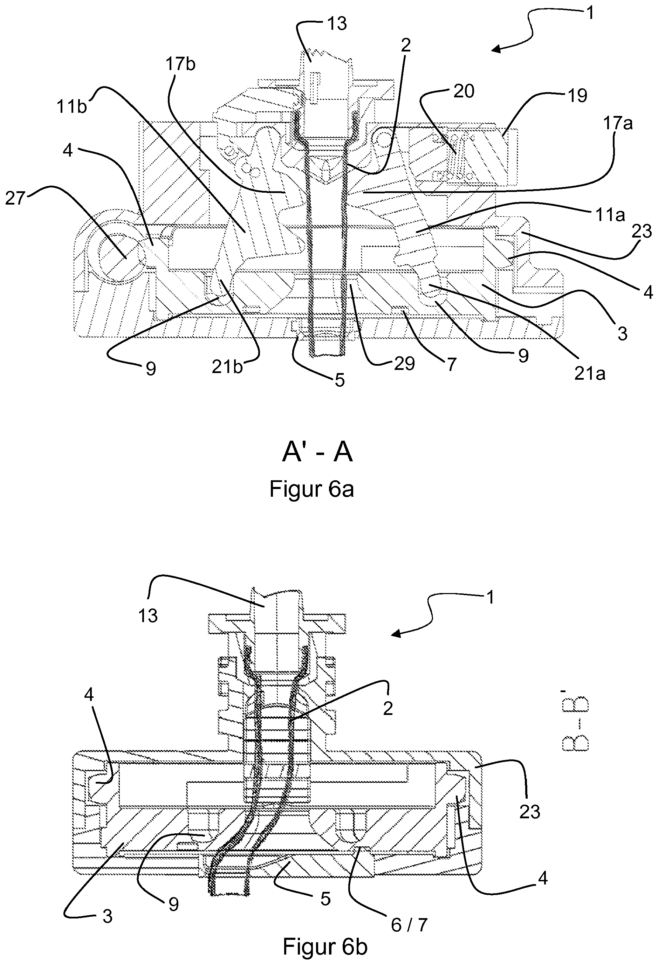

Dagegen zeigen Figuren 6a und 6b das erfindungsgemäße Schlauchventil 1 in einer zweiten Funktionsstellung, nämlich der Zubereitungsstellung bei geöffnetem Durchlassschlauch 2. Wiederum wird der Durchlassschlauch 2 nicht durch die Quetschbacken 17a, 17b gequetscht. Jedoch ist der Schlitten 5 im Vergleich zu Figur 5b horizontal verschoben. Dadurch ist der Durchlassschlauch 2 an seinem unteren Ende in eine andere Richtung gerichtet als in Figur 5b. Er weist jetzt in Richtung eines Getränkeauslasses des Kaffeeautomaten.

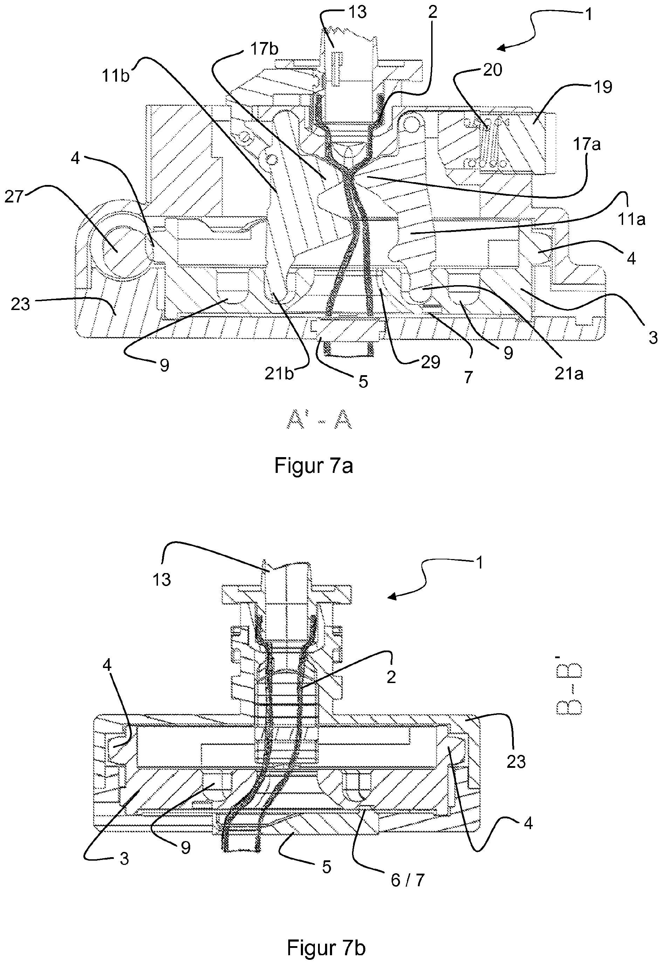

Die Richtung des Durchlassschlauchs 2 ist wiederum auch in Figur 7b die gleiche wie in Figur 6b. In Figur 7a hingegen ist der Durchlassschlauch 2 mit Hilfe der beiden Quetschbacken 17a, 17b nun vollständig abgeklemmt. Das Abklemmen wird beispielsweise nach Abschluss eines Brüh- und Kaffeespendevorgangs durchgeführt, um ein Nachtropfen zu verhindern. Diese dritte Funktionsstellung könnte nun wieder in die erste Funktionsstellung gemäß Figuren 5a und 5b münden, also in die Drainage. Diese Funktionsstellung wird selbsttätig geregelt durch einfaches Drehen des Zahnrads 3 wieder erreicht. Der Schlitten 5 ist über die Führungskulisse 7 und die Quetschbacken 17a, 17b sind über die Quetschbackenführung 9 mit dem Zahnrad 3 gekoppelt. Dadurch ergibt sich auch eine direkte Kopplung von Schlitten 5 und Quetschbacken 17a, 17b miteinander. Die Veränderung der Stellung des Zahnrads 3 bewirkt dadurch ohne weiteres Zutun eine simultane Positionsveränderung beider Elemente.

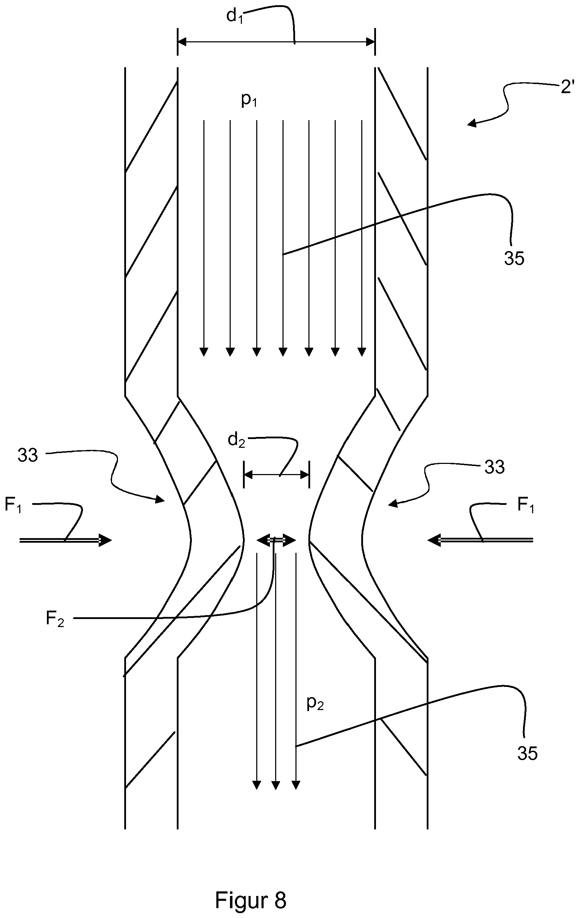

In Figur 8 ist im Längsschnitt ein Durchlassschlauch 2' dargestellt, wie er zur Ausführung einer alternativen Form eines erfindungsgemäßen Schlauchventils verwendet werden kann. Der Durchlassschlauch 2' ist aus einem Material gefertigt, das eine ausreichende Steifigkeit besitzt, um hohen Drücken, etwa im Bereich von 6 bar oder größer, zu widerstehen. Dies kann beispielsweise mit Hilfe von faserartigen Verstärkungen im Schlauch 2' realisiert werden, oder durch Wahl eines ausreichend formstabilen Kunststoffs bei geeigneter Schlauchdicke. Der Durchlassschlauch 2' weist eine elastische Verengung 33 als Regulierungseinrichtung auf, in deren Bereich der Innendurchmesser des Schlauchs 2' von einem Normal-Durchmesser d₁ auf einen Verengungsdurchmesser d₂ reduziert ist. Wenn durch den Durchlassschlauch 2' eine Flüssigkeit 35 mit einem Anfangsdruck P₁ gepumpt wird, wirkt die Verengung 33 wie eine Drossel. Aufgrund der Steifigkeit des Materials des Durchlassschlauchs 2' wird im Bereich der Verengung 33 eine Drosselungskraft F₁ in Richtung des Schlauchinneren ausgeübt. Gegen die Drosselungskraft F₁ wirkt aufgrund eines Anfangsdrucks P₁ in Fließrichtung vor der Verengung 33 eine Gegenkraft F₂, aufgrund derer sich der Verengungsdurchmesser d₂ erhöht. Beispielsweise kann der Durchlassschlauch 2' im Bereich der Verengung 33 komplett geschlossen sein, bis ein ausreichend hoher Anfangsdruck p₁, beispielsweise in Höhe von 6 bar, erreicht ist. Dann öffnet sich die Verengung 33 aufgrund der Gegenkraft F₂, so dass die Flüssigkeit 35 hindurchfließen kann. Stromab der Verengung 33 herrscht ein reduzierter Druck p₂ vor, der in etwa Atmosphärendruck entspricht.

Bei Verwendung des derartig stabil ausgebildeten und geformten Durchlassschlauchs 2' kann die Verwendung von Quetschbacken, wie sie zuvor beschrieben wurden, vollkommen entfallen. Vielmehr reguliert der Durchlassschlauch 2' den Durchfluss selbsttätig ohne aktive zusätzliche Krafteinwirkung von außen.

Da es sich bei den vorhergehenden, detailliert beschriebenen Elementen des Schlauchventils um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Quetschbacken in anderer Form als in der hier beschriebenen folgen. Ebenso kann die Steuerung der Quetschbacken und der Richtungsänderungsvorrichtung in einer anderen Form ausgestaltet werden, wenn dies aus Platzgründen bzw. designerischen oder funktionalen Gründen notwendig ist. Außerdem schließt die Verwendung der unbestimmten Artikel "ein" bzw. "eine" nicht aus, dass die betreffenden Merkmale auch mehrfach vorhanden sein können.

### Bezugszeichenliste

- 1: Schlauchventil
- 2, 2': Durchlassschlauch
- 3: Zahnrad
- 4: Zahnreihe
- 5: Schlitten
- 6: Zapfen
- 7: Führungskulisse
- 9: Quetschbackenführung - Führungsrillen
- 11a, 11b: Klemmhebel
- 13: Anstechvorrichtung
- 15: Führungsöffnung
- 17a, 17b: Quetschbacken
- 19: Stellschraube
- 20: Feder
- 21a, 21b: Führungsnasen
- 23: Gehäuse
- 25: Stellmotor
- 27: Schneckenrad
- 29: Öffnung
- 31: Schienenführung
- 33: Verengung
- 35: Flüssigkeit

- d₁: Normal-Durchmesser
- d₂: Verengungsdurchmesser
- F₁: Drosselungskraft
- F₂: Gegenkraft
- P₁: Anfangsdruck
- P₂: reduzierter Druck

## Patentansprüche

1. Kaffeeautomat mit einem Schlauchventil (1), das einen Durchlassschlauch (2, 2') für Flüssigkeiten (35) und/oder Gase und wenigstens eine Quetschbacke (17a, 17b) zur Regulierung eines Mengendurchlasses durch den Durchlassschlauch (2, 2') aufweist und eine Richtungsänderungsvorrichtung (5, 6, 7), die im Betrieb eine Ausrichtung des Durchlassschlauchs (2, 2') ändert, **gekennzeichnet durch** eine mechanische Kopplung der Quetschbacke (17a, 17b) mit der Richtungsänderungsvorrichtung (5, 6, 7), die so ausgebildet ist, dass eine Richtungsänderung des Durchlassschlauchs in Abhängigkeit von der Stellung der Quetschbacke erfolgt und/oder eine Umstellung der Richtungsänderungsvorrichtung eine entsprechende Positionsveränderung der Quetschbacke bewirkt.

2. Kaffeeautomat gemäss Anspruch 1, **dadurch gekennzeichnet, dass** das Schlauchventil (1) als Heissgetränkespende und/oder Drainage-Auslass und/oder Gas-Auslass ausgebildet ist.

3. Kaffeeautomat gemäss einem der Ansprüche 1 oder 2, **gekennzeichnet durch** eine Quetschbacke (17a, 17b), deren Quetschkräfte federbasiert reguliert sind.

4. Kaffeeautomat gemäss einem der vorhergehenden Ansprüche, **gekennzeichnet durch** ein Führungsrad (3) mit einer Führungskulisse (7) für die Richtungsänderungsvorrichtung (5, 6, 7).

5. Kaffeeautomat gemäss Anspruch 4, **gekennzeichnet durch** eine Quetschbackenführung (9) im Führungsrad (3) zur Verstellung der Quetschbacke (17a, 17b).

6. Kaffeeautomat gemäss einem der vorhergehenden Ansprüche, **dadurch gekennzeichnet, dass** die Quetschbacke (17a, 17b) als Teils eines Klemmhebels (11a, 11b) ausgebildet ist.

7. Kaffeeautomat gemäss einem der vorhergehenden Ansprüche, **gekennzeichnet durch** ein Gehäuse (23), in dem der Durchlassschlauch (2, 2') fest verbunden mit einer Anstechvorrichtung (13) und/oder einer Brühgutaufnahme, vorzugsweise aus dem Gehäuse (23) entnehmbar, vorgehalten wird.

8. Schlauchventil (1) für einen Kaffeeautomaten gemäss einem der vorhergehenden Ansprüche, mit einem Durchlassschlauch (2, 2') für Flüssigkeiten (35) und/oder Gase und mit wenigstens einer Quetschbacke (17a, 17b) zur Regulierung eines Flüssigkeits und/oder Gasdurchlasses durch den Durchlassschlauch (2, 2') und einer Richtungsänderungsvorrichtung (5, 6, 7), die im Betrieb eine Ausrichtung des Durchlassschlauchs (2, 2') ändert, **gekennzeichnet durch** eine mechanische Kopplung der Quetschbacke (17a, 17b) mit der Richtungsänderungsvorrichtung (5, 6, 7), die so ausgebildet ist, dass eine Richtungsänderung des Durchlassschlauchs in Abhängigkeit von der Stellung der Quetschbacke erfolgt und/oder eine Umstellung der Richtungsänderungsvorrichtung eine entsprechende Positionsveränderung der Quetschbacke bewirkt.

## Claims

1. An automatic coffee maker with a tube valve (1) which has a passage tube (2, 2') for liquids (35) and/or gases and at least one pinch jaw (17a, 17b) for controlling a throughput through the passage tube (2, 2') and a direction changing device (5, 6, 7) which changes an orientation of the passage tube (2, 2') during operation, **characterized by** a mechanical coupling of the pinch jaw (17a, 17b) with the direction changing device (5, 6, 7), the mechanical coupling being configured such that a change of direction of the passage tube is carried out depending on the setting of the pinch jaw and/or a resetting of the direction changing device results in a corresponding change of position of the pinch jaw.

2. The automatic coffee maker according to claim 1, **characterized in that** the tube valve (1) is configured as a hot beverage dispenser and/or drainage outlet and/or gas outlet.

3. The automatic coffee maker according to any one of claims 1 or 2, **characterized by** a pinch jaw (17a, 17b) whose pinching forces are spring-controlled.

4. The automatic coffee maker according to any one of the preceding claims, **characterized by** a guide wheel (3) with a guide rail (7) for the direction changing device (5, 6, 7).

5. The automatic coffee maker according to claim 4, **characterized by** a pinch jaw guide (9) in the guide wheel (3) for adjusting the pinch jaw (17a, 17b).

6. The automatic coffee maker according to any one of the preceding claims, **characterized in that** the pinch jaw (17a, 17b) is configured as a part of a clamping lever (11a, 11b).

7. The automatic coffee maker according to any one of the preceding claims, **characterized by** a housing (23) in which the passage tube (2, 2') permanently connected to a tapping device (13) and/or a brewed liquid intake, preferably being removable from the housing (23), is stored.

8. A tube valve (1) for an automatic coffee maker according to any one of the preceding claims, with a passage tube (2, 2') for liquids (35) and/or gases and with at least one pinch jaw (17a, 17b) for controlling a throughput of liquids and/or gases through the passage tube (2, 2') and a direction changing device (5, 6, 7) which changes an orientation of the passage tube (2, 2') during operation, **characterized by** a mechanical coupling of the pinch jaw (17a, 17b) with the direction changing device (5, 6, 7), the mechanical coupling being configured such that a change of direction of the passage tube is carried out depending on the setting of the pinch jaw and/or a resetting of the direction changing device results in a corresponding change of position of the pinch jaw.

## Revendications

1. Machine à café comprenant une valve à tuyau flexible (1), qui comporte un tuyau flexible de passage (2, 2') pour liquides (35) et/ou gaz et au moins une mâchoire d'écrasement (17a, 17b) pour la régulation d'un débit à travers le tuyau flexible de passage (2, 2'), et un dispositif de changement de direction (5, 6, 7), qui, en fonctionnement, change une orientation du tuyau flexible de passage (2, 2'), **caractérisée par** un couplage mécanique de la mâchoire d'écrasement (17a, 17b) au dispositif de changement de direction (5, 6, 7), qui est réalisé de telle manière qu'un changement de direction du tuyau flexible de passage est effectué en fonction de la position de la mâchoire d'écrasement et/ou une manoeuvre du dispositif de changement de direction entraîne un changement de position correspondant de la mâchoire d'écrasement.

2. Machine à café selon la revendication 1, **caractérisée en ce que** la valve à tuyau flexible (1) est réalisée comme élément distributeur de boisson chaude et/ou sortie de drainage et/ou sortie de gaz.

3. Machine à café selon l'une des revendications 1 ou 2, **caractérisée par** une mâchoire d'écrasement (17a, 17b) dont les forces d'écrasement sont régulées sur la base d'un ressort.

4. Machine à café selon l'une des revendications précédentes, **caractérisée par** une roue de guidage (3) comprenant une coulisse de guidage (7) pour le dispositif de changement de direction (5, 6, 7).

5. Machine à café selon la revendication 4, **caractérisée par** un guidage de mâchoire d'écrasement (9) dans la roue de guidage (3) pour le déplacement de la mâchoire d'écrasement (17a, 17b).

6. Machine à café selon l'une des revendications précédentes, **caractérisée en ce que** la mâchoire d'écrasement (17a, 17b) est réalisée comme partie d'un levier de serrage (11a, 11b).

7. Machine à café selon l'une des revendications précédentes, **caractérisée par** un boîtier (23), dans lequel le tuyau flexible de passage (2, 2') est disposé relié fixement à un dispositif de perçage (13) et/ou un élément de réception de produit préparé à l'eau chaude, de préférence de manière amovible du boîtier (23).

8. Valve à tuyau flexible (1) pour une machine à café selon l'une des revendications précédentes, comprenant un tuyau flexible de passage (2, 2') pour liquides (35) et/ou gaz et au moins une mâchoire d'écrasement (17a, 17b) pour la régulation d'un passage de liquide et/ou de gaz à travers le tuyau flexible de passage (2, 2'), et un dispositif de changement de direction (5, 6, 7), qui, en fonctionnement, change une orientation du tuyau flexible de passage (2, 2'), **caractérisée par** un couplage mécanique de la mâchoire d'écrasement (17a, 17b) au dispositif de changement de direction (5, 6, 7), qui est réalisé de telle manière qu'un changement de direction du tuyau flexible de passage est effectué en fonction de la position de la mâchoire d'écrasement et/ou une manoeuvre du dispositif de changement de direction entraîne un changement de position correspondant de la mâchoire d'écrasement.
